# EUROPEAN PATENT APPLICATION

(11) **EP 3 313 052 A1**
(43) Date of publication of application: **25.04.2018**
(21) Application number: 16195285.8
(22) Date of filing: 24.10.2016
(51) Int. Cl.: H04L 29/12, H04L 29/06

(54) **MEANS FOR ENHANCING PRIVACY OF USERS OF A CLOUD-BASED SERVICE**

(71) Applicant: SNIPS, 75002 Paris (FR)
(72) Inventor: POUMEYROL, Mathieu, 75011 Paris (FR)
(74) Representative: Verriest, Philippe

(57) **Abstract**

The present invention generally relates to means for enhancing privacy of users of a cloud-based service. The invention concerns in particular means, adapted to be implemented by a proxy of a communication infrastructure, for routing a query sent by a client using the communication infrastructure, to at least one server of a service provider system for processing said query, by:
receiving the query comprising private data encrypted so that only the at least one server can access the private data;
retrieving an address of the client in the communication infrastructure and storing said address;
sending the query to the at least one server, using an address of the proxy in the communication infrastructure as a source address.

## Description

The present invention generally relates to means for enhancing privacy of users of a cloud-based service.

In a typical client-server interaction, the client-i.e. the application software that runs on the user's terminal-sends a query to a server-i.e. the application software that is accessed remotely by the client, on behalf of the user, through internet. Then, the server analyses the query, handles domain-specific computation-which can be trivial or not-and returns a response comprising results related to the computation, to the originating client. Each time a query is sent, private data of the user may be exposed explicitly and/or implicitly. For instance, when a client sends a geolocalized search query, a location and a search string are sent to the server. If the client and the server use the TCP/IP protocols to transfer data, one critical private data that is provided implicitly by the client is its IP address, since the server needs it to return the response to the client. A usual practice on the server-side consists in logging IP addresses together with the corresponding query. Depending on the configuration of the server, the IP address is usually kept from minutes to days-for a given client. An attacker may be able to collect a history directly of user queries. Even if the IP address is not stored on the server, if an attacker has gained enough access to snoop passively on the requests received by the server, without being detected by the developer, he will be able to use the stored IP addresses as a weak client/user identifier and link together the queries to the user. To solve this specific problem, various means for query anonymization proposed to users willing to mask their identity while using internet services are known. However, this type of solutions is not adapted to be integrated within the infrastructure of a developer-i.e. an organization that provides a client software for the users terminals and runs the servers providing a specific service. Consequently, anonymization means, adapted to be used by developers willing to enforce globally the same level of anonymization, for all of its user, as this type of known user-centric solutions, are still to be offered.

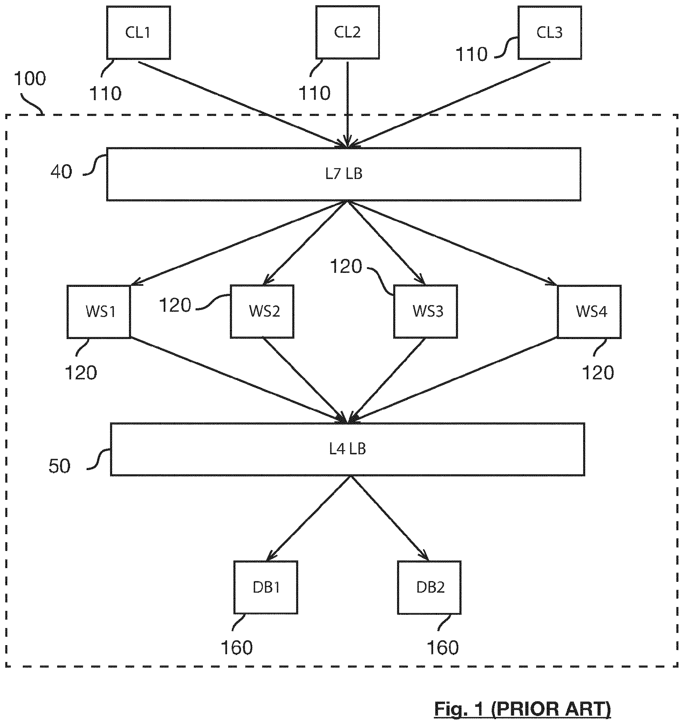

In the context of a cloud infrastructure, a cloud provider designates an organization that lends infrastructure services to developers to host. Referring now to Fig. 1 (PRIOR ART), in a cloud environment 100, the developer has provisionned, from a cloud provider, four web service servers 120, coupled to two database servers 160, and assumes full control over them. Ready-to-use proxies-also usually called Load Balancers 40; 50 - are used by the could provider to front all queries from clients 110 to web service providers 120 and the database servers 160. By using a network configuration the developer has no access to, the cloud provider can provide a fixed DNS address or IP address to the developer, the latter using in turn said address for coding or configuring the clients 110. The developer has very little control or knowledge of how the load balancer are implemented and managed. Load balancers operates in two modes:
- a Level 4 mode (also called layer 4 mode), where routing decisions are taken based on protocols belonging to the fourth layer of the OSI model - typically, IPs and TCP or UDP;
- a Level 7 mode (also called layer 7 mode), where routing decisions are taken based on protocols belonging to the seventh layer of the OSI model -typically, HTTP, FTP, SMTP, DNS protocols.
   Most of the time, level 4 mode is used for internal server to server traffic, while level 7 mode is used to accept queries from the clients. In the example of Fig. 1, the webservers 120 are coupled to two database server 160 by a level 4 load balancer 50, while the clients are coupled to the webservers 120 through a level 7 load balancer 40. By using a level 7 load balancer 40 as fronthead, the cloud provider handles the eventual SSL termination between the clients 110 and the load balancer 40: the cloud provider can thus alter the query before sending it to the actual server 120. The purpose of this alteration is specifically to transfer the client IP to the application backend. Developers expect the server to be able to use and track the client IP when privacy is not a first-class concern. In this configuration, a typical request cycle would be as follow:
   - A client 110 issues a query to be process by the servers 120, 160. The client knows the IP address of the level 7 load balancer 40 and send the query to it, typically using the HTTPS protocole, exposing its own IP to the level 7 load balancer 40.
   - The level 7 load balancer 40 receives and analyse the query, choose one of the Web Service Servers 120 and forwards the query to it, using the IP address of the level 7 load balancer 40 instead of the client's IP address. In order to allow the Web Service Server 120 to make use of the client IP, the level 7 load balancer 40 also alters the query and adds the client's IP address IP as metadata.
   - The chosen Web Service Servers 120 analyses the request and interacts with the database severs 160 to compute a response, through the Level 4 load balancer 50

As a consequence, the Web Service Server 120 has access to the client IP address, since the level 7 load balancer 40 alters the query and adds the client's IP address IP as metadata. Consequently, known cloud based infrastructure does not provides robust solutions, adapted to be used by developers, to protect sensible private data of clients, since clients' IP addresses are sent to the web service server 120.

It is therefore still desirable to provide means for enhancing privacy of users of a cloud-based service, adapted to be offered by a developer.

According to the invention, a user is a person that installs and/or interacts with an application, on a terminal-for example a smartphone-, in order to use a service.

According to the invention, a client is a software application, adapted to be executed on the user terminal, to provide access to a service.

According to the invention, a server is a software application, adapted to be accessed remotely by a client, on behalf of the user, through internet for example.

According to the invention, a developer is an organization that provides a software application of a client, for example for a user's smartphone, and runs the corresponding software application of the server.

According to the invention, a cloud provider is an organization that lends infrastructure services to the developer to host the software application of the server.

To that end, according to a first aspect, the present invention concerns a method, adapted to be implemented by a proxy of a communication infrastructure, for routing a query Qsec_{Ac} sent by a client using the communication infrastructure, to at least one server of a service provider system for processing said query. The method comprises the following steps:
receiving the query comprising private data encrypted so that only the at least one server can access the private data;
retrieving an address Ac of the client in the communication infrastructure and storing said address;
sending the query to the at least one server, using an address of the proxy in the communication infrastructure as a source address.

In particular, the communication infrastructure may be a cloud infrastructure of a cloud provider. The proxy can be hosted in the cloud infrastructure. The service provider system can belong to a developer. Private data are related to the user of the client, and may be exposed explicitly and/or implicitly in the query. Private data are, for instance, a location and a search in the query. The whole content of the query can also be totally encrypted, and not only the private data, so that only the at least one server can access the private data.

The invention allows enhancing privacy of users of a cloud-based service, offered by a developer, by ensuring that the address Ac of the client-for example its IP address, never reaches the at least one server. In fact, since the query is sent by the proxy to the at least one server, using the address of the proxy in the communication infrastructure as a source address, the at least one server only has access to the address of the proxy, and not to the address Ac of the client. Moreover, the proxy cannot access to the content of the encrypted private data. The inventions prevent accidental or malignant address-base tracking on the server, since that the address Ac of the client actually never reaches the server.

As a consequence, the invention address specifically the case where a developer chooses the following set of constraints, to enforce a higher than usual protection of the user privacy:
- the loss of user privacy incurred by one given query drowned in the sum of all queries for all users reaching the server at the same instant is acceptable; this would be akin to somebody speaking on its phone in a crowd, not caring that a few sentences can be overheard by strangers: the conversation is not private, but the anonymity provided by the crowd is considered good enough;
- the ability to link together several queries from a user on a given period of time is *not* acceptable, regardless this is achieved by tracking a user ID given explicitly in the query or by exploitation of the query and protocol metadata; with the same analogy, this would mean intruding on the overheard conversation by shadowing the phone user in the crowd.

The method may further comprise the following steps:
receiving, from the at least one server, a response Rsec_{Apx} to the query comprising private information, in which the private information is encrypted so that only the client can access the private information;
retrieving the address Ac of the client; sending to the client, the response Rsec_{Ac} to the query, using the address of the proxy as a source address.

The query may be sent to the at least one server using a transport level protocol and a secured application level protocol, provided by the communication infrastructure. The response Rsec_{Ac} to the query may be sent to the client using a transport level protocol and a secured application level protocol, provided by the communication infrastructure. The service provider system may comprise at least two servers for processing said query, the query being sent to one of the at least two servers, depending on information extracted by the proxy from the transport level protocol provided by the communications infrastructure. The proxy can be in particular a fronthead load balancer operating in level 4 mode - where routing decisions are taken based on protocols belonging to the fourth layer of the OSI model, instead of the usual level 7 modes. The proxy hides physically the IP of the client from the servers. Moreover, the load balancer no longer holds the developer certificates: it can not decrypt the query content. The server is physically isolated from the client address, totally preventing accidental or malignant IP tracking on the developer controlled system. The load balancer, controlled by the cloud provider knows the IP but can not inspect their content. It only knows how to match the incoming connections - from the client - to the outgoing connections - to the servers. The servers, controlled by the developer, can decrypt and answer the queries, but does not know the originating client IP. We have moved for a situation where the cloud provider and the developer both have full information - IP and query content - to a situation where each party gets minimum information. A benefit of using the Load Balancer as described previously lies in its simplicity to implement and audit, and the absence of marginal cost as Load Balancer is something the developer would typically have to use anyway.

According to a second aspect, the present invention concerns a method, adapted to be implemented by at least one server of a service provider system, for processing a query Qsec_{Ac} sent by a client using a communications infrastructure. The method comprises the following steps:
receiving, from a proxy included in the communications infrastructure, the query comprising encrypted private data;
decrypting the encrypted private data;
determining a response according to the query and the decrypted private data;
encrypting the response so that only the client can access information included in the response;
sending the encrypted response to the proxy.

According to a third aspect, the present invention also relates to a computer program that can be downloaded from a communication network and/or stored on a medium. This computer program comprises instructions for causing implementation of the method according to the first aspect and/or the second aspect, when said program is run by the processor.

According to a fourth aspect, the present invention also relates to information storage means, storing a computer program comprising a set of instructions causing implementation of the method according to the first aspect and/or the second aspect, when the stored information is read from said information storage means and run by a processor.

According to a fifth aspect, the invention present invention also relates to a proxy of a communication infrastructure, adapted to route a query Qsec_{Ac} sent by a client using the communication infrastructure, to at least one server of a service provider system for processing said query. The proxy comprises:
means for receiving the query comprising private data encrypted so that only the at least one server can access the private data;
means for retrieving an address of the client in the communication infrastructure and storing said address;
means for sending the query to the at least one server, using an address of the proxy in the communication infrastructure as a source address.

The proxy may further comprise:
means for receiving, from the at least one server, a response to the query comprising private information, in which the private information is encrypted so that only the client can access the private information;
means for retrieving the address of the client;
means for sending to the client, the response to the query, using the address of the proxy as a source address.

The means for sending the query to the at least one server, may be configured so as that the query is sent to the at least one server using a transport level protocol and a secured application level protocol, provided by the communication infrastructure. The means for sending to the client, the response to the query, may also be configured so as that the query is sent to the client using a transport level protocol and a secured application level protocol, provided by the communication infrastructure. The service provider system may comprise at least two servers for processing said query, and the means for sending the query may be configured so as that the query is sent to one of the at least two servers, depending on information extracted by the proxy from the transport level protocol provided by the communications infrastructure.

According to a sixth aspect, the invention present invention also relates to a server of a service provider system, adapted to process a query Qsec_{Ac} sent by a client using a communications infrastructure, and comprising:
means for receiving, from a proxy included in the communications infrastructure, the query comprising encrypted private data;
means for decrypting the encrypted private data;
means for determining a response according to the query and the decrypted private data;
means for encrypting the response so that only the client can access information included in the response;
means for sending the encrypted response to the proxy.

According to a seventh aspect, the present invention also relates to a system comprising a proxy according to the fifth aspect and at least one server according to sixth aspect.

The characteristics of the invention will emerge more clearly from the following description of an example of an embodiment of the invention, said description being made with reference to the accompanying drawings, amongst which:
Fig. 1 schematically represents a system according to the prior art;
Fig. 2 schematically represents, by a schematic diagram, the steps of a method according to the invention for processing anonymously a query sent by a client to a server of a developer;
Fig. 3 schematically represents, by a schema, a system for processing anonymously a query sent by a client to a server of a developer, according to an embodiment of the invention.

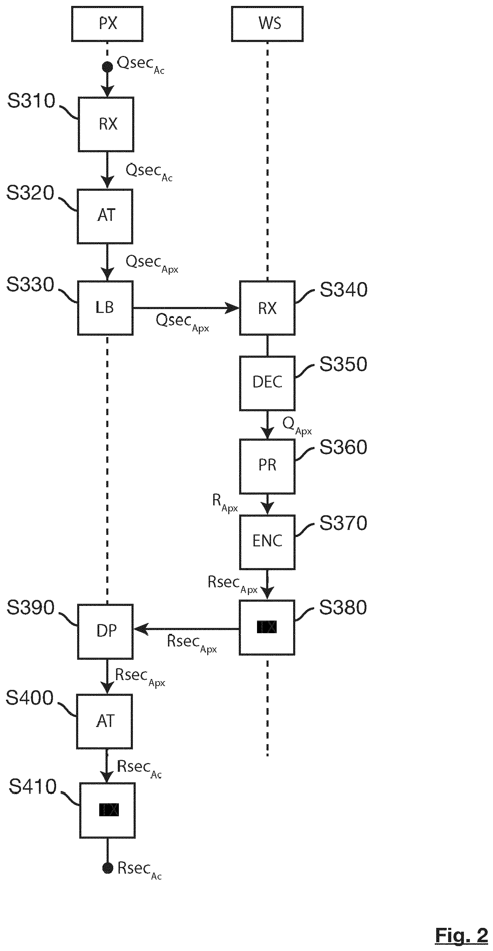

Any and all steps of the method described hereafter with regard to figure. 2 may be implemented in software by execution of a set of instructions or program by a programmable computing machine, such as a PC (*Personal Computer*), a DSP (*Digital Signal Processor*) or a micro-controller; or else implemented in hardware by a machine or a dedicated component, such as an FPGA (*Field-Programmable Gate Array*) or an ASIC (*Application-Specific Integrated Circuit).*

Figure 2 schematically represents a method according to the invention for processing a query Qsec_{Ac} sent by a client C to a server WS of a developer. The method allows in particular to enhance the privacy of the user of the client.

The query Qsec_{Ac} is intended to be processed by at least one server WS and may comprise private data of the user. The query Qsec_{Ac} is sent over a communication infrastructure. The communication infrastructure provides means for sending and routing the query Qsec_{Ac} to an address Aws related to the server WS and a response Asec_{Ac} back to an address Ac related to the client. More particularly, the communication infrastructure may provide means for establising a communication channel between the client and a proxy, means for establising a communication channel between the proxy and the server WS. The proxy PX comprises means for routing information between the server WS and the client C. In the communication infrastructure, the client has an address Ac, the proxy an address Apx, and the server WS an address Aws

The query Qsec_{Ac} is sent encrypted by the client C, so as that only the server WS can decrypt and access to the content of the query Qsec_{Ac}.

In an embodiment, the communication infrastructure implements the seven layers of the OSI model, and more particularly, offers a secured application level protocols for transfering information between the server WS and the client C. For example, the communication infrastructure can offer an HTTPS service. In this example, the query Qsec_{Ac} may then be encrypted by the client C using the HTTPS services.

In a step S31 0, the proxy PX receives, from the client C, the encrypted query Qsec_{IPc}. Since the query has been encrypted by the client C, so as that only the server WS can decrypt and access to the content of the query Qsec_{IPc}, the proxy PX cannot access to the content of the query Qsec_{IPc}.

In a step S320, the proxy PX retrieves the address Ac of the client from the query Qsec_{Ac}, store said address Ac, and replace the address Ac by its own address Apx in the query Qsec_{Ac}. The proxy PX does not decrypt the query Qsec_{Ac}.

In a step S330, the proxy PX send the query Qsec_{Ac} to the server WS.

In an embodiment, the proxy PX is a load balancer configured to share received queries amongst a set of servers WS managed/provided by the developers, according for example to the actual load and/or availability of the set of servers WS. In an advantageous embodiment, the proxy PX is a load balancer configured in Level 4 mode-also called layer 4 mode, where routing decisions are taken based on protocols belonging to the fourth layer of the OSI model -typically, IPs and TCP or UDP. In this embodiment, during the step S330, the proxy PX send the query Qsec_{Ac} to one server WS of the set of servers WS.

In a step S340, the server WS receives the query Qsec_{Ac}. The server WS does not have access to the address A_{C} of the client.

In a step S350, the server WS determines an unencrypted query Q_{Ac} by decrypting the query Qsec_{Ac}.

In a step S360, the server WS process the query Q_{Ac} so as to determine a response R_{Ac}. To process the query Q_{Ac}, the server WS can cooperate with others local or remote means, such as database servers or other servers.

In a step S370, the server WS determine an encrypted response Rsec_{AC} by encrypting the response R_{AC}, so as that only the client C can decrypt and access to the content of the encrypted response Rsec_{AC}.

In a step S380, the server WS send the encrypted response Rsec_{AC} to the proxy PX, using the address Apx received in the query Qsec_{Ac}.

In a step S390, the proxy PX receives the encrypted response Rsec_{AC}.

In a step S400, the proxy PX retrieves the address Ac of the client, stored during the step S320, and replace the address Apx in the encrypted response Rsec_{AC} by the address Ac of the client. The proxy PX does not decrypt the encrypted response Rsec_{AC}.

In a step S41 0, the proxy send the encrypted response Rsec_{AC} to the client C.

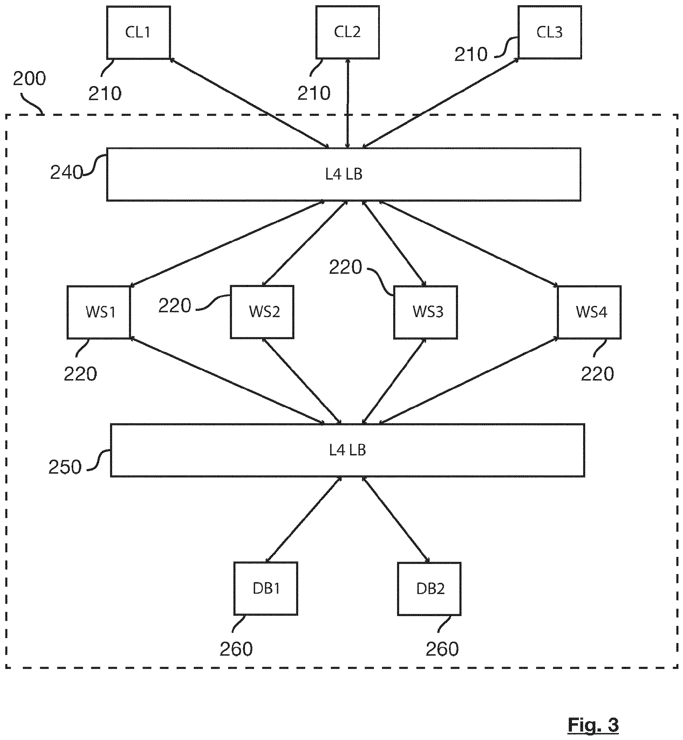

Now we refer to Fig. 3, representing schematically a system for processing anonymously a query sent by a client to a server of a developer, according to an embodiment of the invention. The system is in particular adapted to implement the method according to the invention, previously described and represented on Fig. 2. In this embodiment, the system is part of a cloud infrastructure 200 of a cloud provider. The developer has provisionned, from the cloud provider, four web service servers 220, coupled to two database servers 260, and assumes full control over them. A fronthead load balancer 240 is provided in the cloud infrastructure 200 by the cloud provider to front queries from clients 210 to web service servers 220. The fronthead load balancer 240 is adapted to route secure communications between the clients 210, and the web service servers 220. However, the fronthead load balancer 240 is not provided with means for decrypt data information, and in particular queries, exchange between the clients 210, and the web service servers 220. By configuration, the fronthead load balancer 240 is provided with means for determining an address related to the client having sent a query. The fronthead load balancer 240 is also configured to have access to addresses of the web service servers 220.

Advantageously, the fronthead load balancer 240 may be configured so as to operate in Level 4 mode-also called layer 4 mode, where routing decisions are taken based on protocols belonging to the fourth layer of the OSI model-typically, IPs and TCP or UDP. In this embodiment, if clients 210 are configured to send queries, using an HTTPS tunnel handled by the developer, to the web service servers 220, the fronthead load balancer 240 in level 4 mode will be able to route adequally the queries received from the clients to the web service servers, but will not be capable of decrypt data comprised in the received query. In fact, in this configuration, the SSL terminations are located for one end in the client 210 having sent the query and for the other end in the web service server 220 receiving the query dispatched by the fronthead load balancer 240.

A back-end load balancer 250 may also be provided in the cloud infrastructure 200 by the cloud provider to dispatch queries from web service servers 220 to the database servers 260. Typically, the back-end load balancer 250 is configured so as to operate in Level 4 mode.

A typical scenario will now be described. One of the clients 210 issues a query to be processed by one of the servers 220. The client is configured to send the query to a service address-an IP address for example-related to the services offered by the servers of the developer. The client sends the query to said service address using a cryptographic protocol, for example Transport Layer Security or Secure Sockets Layer, so as that only one of the web service servers 220 can access to the content of the query. Due to the network configuration of the cloud infrastructure, the fronthead loadbalancer 240 receive the encrypted query. The fronthead loadbalancer 240 extracts and stores the address of the client 210, for example an IP address-associated to the query. It is reminded that the fronthead loadbalancer 240 cannot decrypt the query, and consequently cannot access to the content of said query. The fronthead load balancer 240 choose the processing servers 220 amongst all the the Web Service Servers 220 of the developers. The fronthead server sends the encrypted query to the processing server 220, using its own address-for example an IP address of the fronthead load balancer-, instead of the client's address. The processing server 220 decrypts and analyse the query. The processing server may interacts with other web services servers and/or the database severs 160 to compute a response. The processing server 220 sends the answer back to the address of the sender from which it receives the query-i.e. the fronthead load balancer, using a cryptographic protocol, for example Transport Layer Security or Secure Sockets Layer, so as that only one of the client 220 having sent the query can access to the content of the answer. The fronthead loadbalancer 240 receive the encrypted answer. The fronthead loadbalancer 250 loads the stored address of the client 210, and sends the answer back to this stored address of the client 210. It is reminded that the fronthead loadbalancer 240 cannot decrypt the answer, and consequently cannot access to the content of said answer.

## Claims

1. Method, adapted to be implemented by a proxy (240) of a communication infrastructure, for routing a query (Qsec_{Ac}) sent by a client (210) using the communication infrastructure, to at least one server (220) of a service provider system for processing said query, **characterized in that** it comprises the following steps:
receiving (S310) the query comprising private data encrypted so that only the at least one server can access the private data;
retrieving an address (Ac) of the client in the communication infrastructure and storing said address (S320);
sending (S330) the query to the at least one server, using an address of the proxy in the communication infrastructure as a source address.

2. Method according to claim 1, further comprising:
receiving (S390), from the at least one server, a response (Rsec_{Apx}) to the query comprising private information, in which the private information is encrypted so that only the client can access the private information;
retrieving (S400) the address (Ac) of the client;
sending (S410) to the client, the response (Rsec_{Ac}) to the query, using the address of the proxy as a source address.

3. Method according to any one of the preceding claims, wherein the query is sent to the at least one server using a transport level protocol and a secured application level protocol, provided by the communication infrastructure.

4. Method according to claim 2, wherein the response (Rsec_{Ac}) to the query is sent to the client using a transport level protocol and a secured application level protocol, provided by the communication infrastructure.

5. Method according to claim 3 and/or 4, wherein the service provider system comprises at least two servers (220) for processing said query, the query being sent to one of the at least two servers, depending on information extracted by the proxy from the transport level protocol provided by the communications infrastructure.

6. Method, adapted to be implemented by at least one server (220) of a service provider system, for processing a query (Qsec_{Ac}) sent by a client (210) using a communications infrastructure, **characterized in that** it comprises the following steps:
receiving (S340), from a proxy included in the communications infrastructure, the query comprising encrypted private data;
decrypting (S350) the encrypted private data;
determining (S360) a response according to the query and the decrypted private data;
encrypting (S360) the response so that only the client can access information included in the response;
sending (S330) the encrypted response to the proxy.

7. Computer program comprising instructions for causing implementation of the method according to any one of the claims 1 to 5 or the method according to claim 6, when said program is run by the processor.

8. Support for storing a computer program comprising a set of instructions causing implementation of the method according to any one of the claims 1 to 5 or the method according to claim 6, when the stored information is read from said support and run by a processor.

9. Proxy (240) of a communication infrastructure, adapted to route a query (Qsec_{Ac}) sent by a client (210) using the communication infrastructure, to at least one server (220) of a service provider system for processing said query, **characterized in that** it comprises:
means for receiving the query comprising private data encrypted so that only the at least one server can access the private data;
means for retrieving an address of the client in the communication infrastructure and storing said address;
means for sending the query to the at least one server, using an address of the proxy in the communication infrastructure as a source address.

10. Proxy according to claim 9, further comprising:
means for receiving, from the at least one server, a response to the query comprising private information, in which the private information is encrypted so that only the client can access the private information;
means for retrieving the address of the client;
means for sending to the client, the response to the query, using the address of the proxy as a source address.

11. Proxy according to any one of the claims 9 or 10, wherein the means for sending the query to the at least one server, are configured so as that the query is sent to the at least one server using a transport level protocol and a secured application level protocol, provided by the communication infrastructure.

12. Proxy according to claim 10, wherein the means for sending to the client, the response to the query, are configured so as that the query is sent to the client using a transport level protocol and a secured application level protocol, provided by the communication infrastructure.

13. Proxy according to claim 11 and/or 12, wherein the service provider system comprises at least two servers for processing said query, and wherein the means for sending the query being configured so as that the query is sent to one of the at least two servers, depending on information extracted by the proxy from the transport level protocol provided by the communications infrastructure.

14. Server (220) of a service provider system, adapted to process a query (Qsec_{Ac}) sent by a client (210) using a communications infrastructure, **characterized in that** it comprises:
means for receiving, from a proxy included in the communications infrastructure, the query comprising encrypted private data;
means for decrypting the encrypted private data;
means for determining a response according to the query and the decrypted private data;
means for encrypting the response so that only the client can access information included in the response;
means for sending the encrypted response to the proxy.

15. System comprising a proxy according to any one of claims 9 to 13, and at least one server according to claim 14.
